# EUROPÄISCHE PATENTANMELDUNG

(11) **EP 2 365 575 A1**
(43) Veröffentlichungstag der Anmeldung: **14.09.2011**
(21) Anmeldenummer: 10015556.3
(22) Anmeldetag: 13.12.2010
(51) Int. Cl.: H01M 10/48, G01F 23/26, G01N 21/78, G01N 21/80, G01N 27/22, H01G 9/155, H01G 9/145

(54) **Selektiver Flüssigkeits-Sensor für Vorrichtungen zum Speichern und Erzeugen von Energie**

(30) Priorität: 02.03.2010 EP 10002114
(71) Anmelder: Carl Freudenberg KG, 69469 Weinheim (DE)
(72) Erfinder: Kritzer, Peter, Dr., 67147 Forst (DE); Schreiner, Marcel, 68259 Mannheim (DE)

(57) **Zusammenfassung**

Die Erfindung betrifft einen Sensor zur Erkennung von Flüssigkeiten In Vorrichtungen zum Speichern von Energie, eine Vorrichtung zum Speichern von Energie, ein Überwachungssystem zur Überwachung von Vorrichtungen zum Speichern von Energie sowie ein Verfahren zur Überwachung von Vorrichtungen zum Speichern von Energie.

## Beschreibung

### Technisches Gebiet

Die Erfindung betrifft einen Sensor zur Erkennung von Flüssigkeiten in Vorrichtungen zum Speichern von Energie, eine Vorrichtung zum Speichern von Energie, ein Überwachungssystem zur Überwachung von Vorrichtungen zum Speichern von Energie sowie ein Verfahren zur Überwachung von Vorrichtungen zum Speichern von Energie.

### Stand der Technik

Durch die fortschreitende Entwicklung im Bereich der Automobil- bzw. Fahrzeugtechnik werden Vorrichtungen zum Speichern von Energie, wie Batterien, Akkumulatoren sowie Superkondensatoren für Elektrofahrzeuge, immer wichtiger. Derartige Vorrichtungen zum Speichern von Energie sind in Gehäusen angeordnet, in denen sich hermetisch abgeschirmte Energiespeicherzellen befinden. Die Gehäuse dienen zur mechanischen Fixierung der Zellen und zum Schutz vor Beschädigungen. Die intakten Gehäuse selbst enthalten bei regulärem Betrieb keine Flüssigkeiten, sondem umschließen einen trockenen Innenraum.

Analog finden solche elektrochemischen Speichersysteme verbreitete Anwendung als Back-up Energiespeicher in anderen mobilen Applikationen (z.B. in Schienenfahrzeugen, Flugzeugen) sowie für stationäre Applikationen. Des Weiteren werden insbesondere Batterien für industrielle Traktionsapplikationen (Roboter, Flurförderfahrzeuge, Gabelstapler) eingesetzt.

In Batterie-Gehäusen können systembedingt Flüssigkeiten auftreten. Diese Flüssigkeiten haben unterschiedliche Herkunft und unterschiedliche chemischen / physikalischen Eigenschaften; ebenso sind die Konsequenzen ihres Auftretens stark unterschiedlich. Die unterschiedlichen Flüssigkeiten, die in Batterie-Gehäusen auftreten können, sind insbesondere;
- Kondenswasser (i. d. R. demineralisiertes Wasser),
- Schmutzwasser (i. d. R. Wasser mit ionischen Komponenten;
   vergleichbar mit Leitungswasser),
- Medium des Kühlkreislaufes (i. d. R. Wasser mit Kälteschutz-Zusätzen wie Glykol),
- Elektrolyt der Zellen (je nach Art der Zellen
   a) wässrige Lösungen, enthaltend hohe lonen-Konzentrationen, z.B. durch Zusätze von H₂SO₄ oder KOH,
   b) polare organische Lösungsmittel mit hohen Konzentrationen an so genannten Leitsalzen wie LiPF₆.

Eine besondere Herausforderung ist, dass je nach Herkunft der Flüssigkeit die Reaktion stark unterschiedlich ist. Wird in einem Batterie-Gehäuse Kondenswasser detektiert, sollte dieses **zB.** im nächsten Routine-Intervall entfernt werden; das Vorhandensein von Elektrolyt außerhalb der Zellen stellt hingegen einen äußerst kritischen Zustand dar, die Batterie sollte dann auf keinen Fall mehr weiterbetrieben werden.

In den Gehäusen befindet sich üblicherweise ein freier Raum, der nicht mit Zellen gefüllt werden kann, ein sogenanntes Totvolumen. Dieses macht bei Batterien ca. **5** % des Gehäusevolumens aus. Das Totvolumen kann auch deutlich oberhalb von 5% liegen, beispielsweise bei der Verwendung von geometrisch ungünstigen Rundzellen für die Energiespeicherung.

Vorrichtungen zum Speichern von Energie, beispielsweise Brennstoffzellen oder Batterien für Kraftfahrzeuge und dergleichen, werden häufig in wechselnden Temperaturumgebungen betrieben, beispielsweise im Wechsel von Sommer und Winter oder Tag und Nacht, was Temperaturschwankungen innerhalb des Gehäuses hervorruft Solche Druckschwankungen können in elektrisch betriebenen Kraftfahrzeugen darüber hinaus bei sogenannten Bergfahrten auftreten. So hat sich nach einer Bergfahrt das Innere des Batterie-Gehäuses auf ein niedriges Druckniveau eingestellt. Wird nun das Fahrzeug bergab bewegt, strömt Umgebungsluft höheren Drucks in das Innere des Batterie-Gehäuses. Aufgrund des hermetisch abgeschlossenen Gehäuses können dann leichte Überdrücke oder Unterdrücke entstehen. Dies kann sich negativ auf die Abdichtung der in der Batterie angeordneten Energiespeicherzellen aus und beeinflusst damit die Lebensdauer der Vorrichtung insgesamt. Darüber hinaus wirken sich größere Druckschwankungen auch negativ auf zusätzliche Komponenten aus, beispielsweise auf eine elektrische Leistungs- und Überwachungskontaktierung der Energiespeicherzellen sowie von Abdichtungen von Gehäusedurchführungen von Kabeln; letztere können dabei undicht werden.

Um derartige Druckschwankungen zu reduzieren, wird das Totvolumen von Batterien im Stand der Technik mit Silikori-Vergussmassen aufgefüllt (Lamm et al., "Lithium-lonen-Batterie. Erster Serieneinsatz im S400 Hybrid"; 2009, ATZ 111, 490f.). Dabei ist nachteilig, dass sich die Masse der Batterie deutlich erhöht. Zudem ist das Vergießen von Polymermassen teuer und aufwändig, auch wegen der erforderlichen Vernetzung der Silikone. Außerdem wird das Austauschen einzelner Zellen im Wartungs- bzw. Reparaturfall wesentlich erschwert.

Wenn das Totvolumen dagegen nicht mit festen oder flüssigen Medien aufgefüllt wird, kann bei Temperaturschwankungen ein Luftaustausch mit der Umgebung stattfinden. Bei niedriger Temperatur gelangt dann durch den relativen Unterdruck Luft in das Gehäuse. Dadurch können sowohl Feuchtigkeit als auch Staub in das Gehäuse gelangen. Die Feuchtigkeit kann im Inneren der Batterie kondensieren, was die Wahrscheinlichkeit von Kurzschlüssen, Korrosion, etc. erhöht, In einer Batterie mit einem Totvolumen von 10 1 können sich bei täglichem Betrieb innerhalb von 3 Jahren, einem üblichen Wartungsintervall, etwa 50g Kondenswasser ansammeln.

Außerdem kann Spritzwasser, beispielsweise durch Regen, Wasserpfützen etc., oder Reinigungs-Wasser, beispielsweise durch Hochdruckreiniger, in das Innere des Gehäuses der Batterie gelangen, da Batterien oft im Bereich des Fahrzeugbodens angeordnet werden. Dieser Effekt kann verstärkt werden, wenn das Batterie-Gehäuse bzw. dessen Dichtung schadhaft geworden ist und Risse oder sonstige undichte Stellen aufweist.

Bei einem Abruf von gespeicherter Energie aus den Zellen entsteht Wärme, so dass die Zellen gekühlt werden müssen. Dies erfolgt in der Regel durch eine Kontakt-Kühlung mit Wasser-basierten Kühlmedien, beispielsweise in Form einer Wasser-Glykol-Mischung. Bei Beschädigungen des Kühlsystems kann Kühlflüssigkeit in das Batteriegehäuse eindringen. Darüber hinaus kann Kühlmedium auch durch Permeation durch elastomere Dichtungsmaterialien ins Gehäuse-Innere gelangen. Bei typischen Lebensdauem solcher Batterie-Systeme von bis zu 15 Jahren können auch auf diese Weise Flüssigkeitsmengen von > 100 g in das Gehäuse gelangen.

Schließlich kann bei Beschädigung der Zellen Elektrolytlösung in das die Zellen umgebende Gehäuse gelangen. Als Elektrolyte in Speichern für elektrische

Energie kommen leitende Flüssigkeiten zum Einsatz. Die Elektrolyte können wässrige Lösungen mit gelösten Salzen, Basen oder Säuren sein. Insbesondere in Lithium-Akkumulatoren werden polare organische Lösungsmittel eingesetzt, beispielsweise Diethylcarbonat, die zur Erhöhung der Leitfähigkeit mit Salzen, zum Beispiel mit Lithiumhexafluorophosphat, versetzt werden. Superkondensatoren enthalten im Allgemeinen polare organische Lösungsmittel wie Acetonitril.

In der DE 10 2008 013 407 A1 oder der DE 10 2007 063 280 A1 werden Sensoren für Batterien offenbart. Sie dienen der Zustandserkennung einer Batterie. Dabei wird die elektrische Zustandsgröße einer Batterie, beispielsweise eine Klemmenspannung, gemessen und der gemessene Wert an eine Auswertungseinheit übertragen.

Sensor-Systeme, die für Leckage-Detektion eingesetzt werden können, sind kommerziell erhältlich. Angeboten werden beispielsweise optische Füllstandssensoren, kapazitive Füllstandssensoren oder metallgekapselte Niveaufühler auf PTC-Basis. Solche Sensoren erlauben allerdings nur eine unselektive Detektion von Flüssigkeiten, das heißt, sie unterscheiden nicht zwischen verschiedenen Flüssigkeftsarten.

Die bekannten Sensorsysteme sind unselektiv. Sie unterscheiden nicht zwischen verschiedenen Flüssigkeiten. Dem Empfänger wird lediglich das Signal übermittelt, das eine Flüssigkeit in das Batteriegehäuse eingedrungen ist. Das unselektive Signal ist nachteilig, da es zu fehlerhaften Schlussfolgerungen führen kann. So wäre eine Unterbrechung des Betriebs, beispielsweise das sofortige Anhalten eines Fahrzeuges, unnötig, wenn nicht Elektrolytlösung, sondem lediglich Kondenswasser in das Gehäuse eingedrungen ist. Anderenfalls wäre ein weiterer Betrieb der Vorrichtung gefährlich, wenn tatsächlich Elektrolyt in das Gehäuse eintritt. Falls dem Anwender beispielsweise in einem Kfz angezeigt würde, dass er dennoch den Betrieb fortsetzen kann, könnten schwere Schäden eintreten, beispielsweise durch einen Brand der Batterie.

### Aufgabe der Erfindung

Der Erfindung liegt die Aufgabe zugrunde, einen Sensor für Energiespeichersysteme bereitzustellen, welche die oben beschriebenen Probleme überwinden. Aufgabe der vorliegenden Erfindung ist es, Sensoren zur Verfügung zu stellen, der verschiedene in einem Gehäuse der Vorrichtung zum Speichern von Energie möglicherweise auftretende Flüssigkeiten qualitativ, quantitativ, selektiv und zuverlässig erkennen, Es sollen auch Vorrichtungen zum Speichern von Energie, Überwachungssystem zur Überwachung von Vorrichtungen zum Speichern von Energie sowie Verfahren und Verwendungen bereitgestellt werden, die solche Sensoren nutzen. Der Sensor soll es ermöglichen, abhängig von der erkannten Flüssigkeit und deren Menge eine Vorrichtung zum Speichern von Energie zu steuern. Der Sensor soll daher auch zur Vermeidung von Beschädigungen dienen und eine Erhöhung der Lebensdauer bewirken. Der Sensor soll insbesondere selektiv zwischen dem Eindringen von Wasser und Elektrolyt unterscheiden können.

### Darstellung der Erfindung

Überraschenderweise wird die Aufgabe gelöst durch Sensoren, Vorrichtungen, Überwachungssysteme, Verfahren und Verwendungen gemäß den Patentansprüchen.

Gegenstand der Erfindung ist ein Sensor (1) zur selektiven Erkennung von Flüssigkeiten in Vorrichtungen zum Speichern von Energie, wobei der Sensor (1) zumindest eine poröse Aufnahmeschicht (3) zur Absorption von Flüssigkeiten umfasst.

Der Sensor (1) erkennt bevorzugt selektiv, ob er mit Wasser, mit einem Elektrolyten und/oder überhaupt nicht mit einer Flüssigkeit in Kontakt steht. Dabei bedeutet "selektiv", dass der Sensor unterscheiden kann, ob er beispielsweise mit Wasser oder mit Elektrolytlösung in Kontakt steht. Insbesondere ist bei solchen Sensoren von Bedeutung, dass sie selektiv die Gegenwart von Elektrolyt erkennen. Insbesondere unterscheidet der Sensor bevorzugt selektiv Elektrolyte von Wasser. Bevorzugt kann der Sensor auch bei einer schon vorhandenen Beladung mit Wasser ein zusätzliches Auftreten vergleichsweise geringer Mengen an Elektrolyt sicher erkennen. Bevorzugt erkennt der Sensor auch quantitativ, mit welcher Menge einer Flüssigkeit er in Kontakt steht.

Dabei steht der Begriff "Wasser" für wässrige Medien, die eine geringe lonenkonzentration aufweisen und in Vorrichtungen zum Speichern von Energie nicht als Elektrolyte eingesetzt werden und geeignet sind. Dazu zählen insbesondere Leitungswasser, destilliertes Wasser (Kondenswasser), Regenwasser, Kühlwasser (wie Wasser Glykol Gemische) oder Wasser mit Reinigungsmitteln. Bevorzugt liegt die elektrische Leitfähigkeit bei 27°C bei weniger als 2000 mS/m oder bei weniger als 500 mS/m.

Durch die selektive Erkennung der verschiedenen Flüssigkeiten ist es anhand der jeweiligen ermittelten Flüssigkeiten möglich, ggf. die Vorrichtung von Verbrauchem zu trennen sowie Wartungssignale bereitzustellen, die beispielsweise einem Fahrer des Fahrzeugs anzeigen, dass ein entsprechender Fehler vorliegt, und dem Fahrer gegebenenfalls Möglichkeiten zur Fehlerbehebung aufzeigen.

Wird beispielsweise demineralisiertes Wasser festgestellt, welches in der Regel durch Kondenswasser gebildet wird, wird ein Wartungssignal erzeugt, dass Kondenswasser in der Vorrichtung festgestellt wurde und dass die Vorrichtung ausgetauscht werden sollte und/oder das Kondenswasser aus dem Gehäuse entfernt werden sollte. Das Kondenswasser resultiert dabei in der Regel aus dem Eindringen von feuchter Luft in das Gehäuse der Vorrichtung und weist üblicherweise eine elektrische Leitfähigkeit von weniger als 1 mS/m unter Normalbedingungen auf.

Leitungswasser weist üblicherweise eine elektrische Leitfähigkeit im Bereich zwischen ca. 1 mS/m bis 500 mS/m auf. Leitungswasser kann beispielsweise durch von außen eindringendes Wasser aufgrund von Undichtigkeiten in Gehäuseabdichtungen der Vorrichtung eindringen. Wird dies festgestellt, so werden, sofern die entsprechende festgestellte Menge nicht allzu hoch ist, ähnliche Signale wie bei dem Erkennen des Kondenswassers erzeugt.

Falls ein Kühlmedium erkannt wird, das heißt in der Regel einem Gemisch eines organischen Stoffes und Wasser, beispielsweise eine Wasser-Glykol-Mischung, so deutet dies auf eine Leckage in einem Kühlkreislauf der Vorrichtung hin. In diesem Fall ist eine sichere und gleichmäßige Temperierung der einzelnen Energiespeicher- und /oder -erzeugerzellen nicht mehr gewährleistet. Es wird dann ein Signal erzeugt, welches signalisiert, dass die Vorrichtung möglichst umgehend ausgetauscht bzw. die Leckage behoben und das Gehäuse getrocknet werden soll.

In einer bevorzugten Ausführungsform ist der Sensor so sensitiv eingestellt, dass zwischen verschiedenen Arten von Wasser unterschieden werden kann, beispielsweise zwischen Kondenswasser und Leitungswasser, bzw. zwischen Kondenswasser, Leitungswasser und Kühlmedium.

Erfindungsgemäße Vorrichtungen zum Speichern von Energie sind insbesondere Batterien, Brennstoffzellen, Akkumulatoren und Kondensatoren.

Bei Doppelschicht-Kondensatoren oder Superkondensatoren ("Super-Caps") sind Elektrolyt-haltige Zellen in einem Gehäuse angeordnet. Sie enthalten als Elektrolyt stark polare organische Flüssigkeiten wie beispielsweise Acetonitril. Auch bei derartigen Doppelschicht-Kondensatoren führt ein **Verlust** von Elektrolyt zu einem kritischen Zustand des Kondensators. Die organischen Elektrolyte sind entflammbar und können sich an stromführenden Teilen entzünden.

Solche Vorrichtungen zum Speichern von Energie weisen einen Elektrolyten auf. Unter einem Elektrolyt wird erfindungsgemäß eine leitfähige Lösung verstanden. Die Leitfähigkeit ist ausreichend hoch, um bei der Energiespeicherung technisch genutzt zu werden. Das Lösungsmittel kann Wasser oder ein organische Lösungsmittel sein. Die wässrige Lösung weist bevorzugt ein Lösungsmittel und ein darin gelöstes Salz, eine Säure oder eine Base auf. Die Leitfähigkeit liegt in der Regel oberhalb von 1 S/m, insbesondere oberhalb von 5 S/m oder von 10 S/m. Die Elektrolyten können übliche Salze enthalten, beispielsweise solche von Lithium oder anderen Alkali-Metallen.

Bei Zell-Systemen wird i.d.R. zwischen Systemen mit wässrigen Elektrolyten (z.B. Blei-Säure-Batterien, Nickel-Cadmium-Batterien bzw. Nickel-Metallhydrid-Batterien) und solchen mit organischen Elektrolyten (z.B. Lithium-lonen-Batterien bzw. Lithium-Polymer-Batterien) unterschieden. In Lithium-Batterien verbietet sich aufgrund der hohen Zellspannung der Einsatz wässriger Elektrolyte; sie würden elektrolysiert, Dementsprechend werden in solchen Zellen elektrochemisch stabile organische Lösungsmittel wie organische Carbonate eingesetzt. Zur Erhöhung der ionischen Leitfähigkeit werden diesen Lösungsmitteln inerte Leitsalze wie z.B. LIPF₆ zugesetzt.

Wird durch den Sensor Elektrolyt im Gehäuse der Vorrichtung detektiert, das heißt außerhalb der einzelnen Zelle, so deutet dies auf eine Leckage einer oder mehrerer einzelner Zellen hin. Die Vorrichtung darf dann nicht mehr weiter für eine Energieerzeugung und/oder -speicherung verwendet werden, da sich ansonsten der Elektrolyt beispielsweise an stromführenden Teilen eines Fahrzeugs entzünden kann. Tritt also ein solcher Fehler auf, so sollte ein mit der Vorrichtung versehenes Fahrzeug in keinem Fall weiterbewegt werden. Des weiteren sollte eine Zelle, welche Elektrolyt verliert, auf keinen Umständen mehr geladen werden, da dies zu einem Brand bzw. einer Explosion der Zelle führen kann.

Besonders vorteilhaft ist ein Sensor, der bei einer vorherigen Beladung mit Wasser (Kühlmedium, Kondenswasser bzw. Schmutzwasser) ein zusätzliches Vorhandensein von Elektrolyt schnell und sicher detektiert. Idealerweise kann dieser Sensor Elektrolyt-Mengen erkennen, die sehr klein sind im Vergleich zu den Mengen an wässrigen Medien. Das heißt, die Signale zwischen wässrigen Medien und Elektrolyt sollten weit auseinander liegen.

Der erfindungsgemäße Sensor wird in Vorrichtungen zum Speichern von Energie eingesetzt. Solche Vorrichtungen weisen üblicherweise einen flüssigen Elektrolyten auf. Der Elektrolyt liegt in mindestens einem Behälter vor. Die Behälter sind in einem Gehäuse angeordnet, das üblicherweise nicht mit Elektrolyt gefüllt ist oder in Kontakt steht.

Der Sensor wird in Vorrichtungen zum Speichern von Energie eingesetzt. Die Energie ist insbesondere elektrochemische Energie. Die Vorrichtung kann die Energie in Form von Strom abgeben. Sie dient somit auch zur Erzeugung und Wandlung von Energie,

Vorteilhafterweise ist der Sensor als kapazitiver und/oder optischer Sensor ausgebildet.

In einer bevorzugten Ausführungsform ist der Sensor ein kapazitiver Sensor. Dieser detektiert eine Veränderung der Kapazität eines einzelnen Kondensators. Ein kapazitiver Sensor weist dieser den Vorteil auf, dass dieser preiswert in der Herstellung ist. Zudem ist er robust gegenüber partikulärer Kontamination wie Staub, etc. und auch gegenüber Erschütterungen und Vibrationen. Des Weiteren ist er in einem insbesondere für eine Batterie eines Fahrzeugs relevanten Temperaturbereich von ca. -30°C bis +60°C einsetzbar und weist selbst eine geringe Temperaturabhängigkeit auf. Ein kapazitiver Sensor weist eine hohe Empfindlichkeit gegenüber verschiedenen Flüssigkeiten auf und erlaubt quantitative Aussagen bezüglich der Menge der erkannten Flüssigkeit. Zudem erlauben kapazitive Sensoren eine Unterscheidung von Flüssigkeiten, die mit optischen Sensoren nicht oder nur ungenau voneinander unterscheidbar wären. So können anhand eines kapazitiv ausgebildeten Sensors auch sehr geringe Konzentrationen erkannt werden, beispielsweise eine sehr geringe Konzentration von Elektrolyt in Wasser. Bei Einsatz eines kapazitiven Sensors können Elektrolyten deutlich von den übrigen wässrigen Medien unterschieden werden. Die relative Kapazität des Sensors, der mit Elektrolyt in Kontakt steht, ist signifikant höher als die des Sensors, der mit Wasser in Kontakt steht, wobei der Unterschied mindestens den Faktor 2, mindestens 5 oder mindestens 10 betragen kann.

Der Sensor kann auch ein optischer Sensor sein, wobei darunter auch ein UV oder Infrarot-Sensor verstanden wird. Eine solche Ausgestaltung kann beispielsweise sinnvoll sein, wenn die Elektrolytlösung farbig ist oder farbig markiert ist oder durch eine Farbreaktion mit einem im Gehäuse sich befindlichen Farbstoff oder Indikator angefärbt wird. Dieser Farbstoff kann sich beispielsweise auf einem Träger befinden, welcher die Flüssigkeit aufnimmt und dadurch einen Farbumschlag bewirkt.

Der Sensor ist bevorzugt nicht ein schaltender Sensor, der nur zwischen zwei Zuständen unterscheidet, wie ein kapazitiver Näherungsschalter oder ein optischer Grenzwertschalter. Der Sensor arbeitet bevorzugt reversibel, d.h. er kann aufgenommene Flüssigkeit wieder abgeben und wird dabei in den ursprünglichen Zustand zurückversetzt, gegebenenfalls nach einem Reaktivierungsschritt wie Spülen und/oder Trocknen. Im Gegensatz dazu sind mechanische Sensoren, die auf Quellung beruhen, im Allgemeinen nicht reversibel einsetzbar und auch nicht selektiv für verschiedene Flüssigkeiten. Bevorzugt wird der Sensor so konstruiert, dass sich bei der Aufnahme von Wasser die Lage und der Abstand der leitenden Schichten nicht oder nur unwesentlich ändert.

Der Sensor kann in einer bevorzugten Ausführungsform so aufgebaut sein, dass sich dessen Aufnahmeeinheit oder die komplette Einheit einfach austauschen lässt. Bei Austausch der Aufnahmeeinheit könnte nur die Aufnahmeschicht ausgetauscht werden, oder aber der "Sensorkopf" enthaltend die beiden leitfähigen Schichten mit der dazwischen liegenden Aufnahmeschicht.

Der Sensor umfasst mindestens eine poröse Aufnahmeschicht. Die Aufnahmeschicht ist flüssigkeitsabsorbierend, insbesondere wasser- und elektrolytabsorbierend. Dies bedeutet, dass sie eine bestimmte Menge Flüssigkeit aus der Umgebung aufnehmen kann. Der Vorteil dabei ist, dass diese Aufnahmeschicht die zu erkennende Flüssigkeit sammeln und konzentrieren kann. Auf dieser Weise können auch geringe Flüssigkeitsmengen in dem Gehäuse von dem Sensor detektiert werden, und der Sensor kann ein zuverlässiges und präzises Signal aussenden. Bei einem kapazitiven Sensor ist die Aufnahmeschicht bevorzugt zwischen zwei leitfähigen Schichten positioniert.

Vorteilhafterweise ist die Aufnahmeschicht ein Dielektrikum. Dieses bildet eine elektrisch nicht leitende Schicht. Die Aufnahmeschicht ist bevorzugt zwischen zwei elektrisch leitenden Schichten angeordnet, Der Vorteil dieser Anordnung ist, dass die Flüssigkeit auf einfache Weise zwischen zwei elektrisch leitenden Schichten aufnehmbar ist, so dass sich dadurch die Kapazität ändert. Die Kapazitätsänderung ist dabei abhängig von der Art der in der Aufnahmeschicht aufgenommenen Flüssigkeit.

Zweckmäßigerweise umfasst zumindest eine elektrisch leitende Schicht Poren. Der Vorteil hierbei ist, dass die zu erkennende Flüssigkeit durch die Poren einfacher in die Aufnahmeschicht gelangt. Der Sensor kann damit schneller und zuverlässiger die Art der Flüssigkeit erkennen.

Die Aufnahmeschicht ist beispielsweise ein Vlies, ein Gewebe, eine mikroporöse Membran, ein Papier, eine beschichtete Folie oder ähnliches, oder eine Kombination solcher Materialien.

In einer bevorzugten Ausführungsform umfasst die Aufnahmeschicht (3) ein Vlies. Bevorzugt weist das Vlies Fasern auf, die ein organisches Polymer enthalten. Das Polymer ist bevorzugt ein synthetisches Polymer. Dieses ist bevorzugt ausgewählt aus der Gruppe der Polyester, Polyamide, ,Polyacrylate, Polymethacrylate, Polyoxyalkylene, Polysäuren sowie Copolymere davon, natürliche Polymere wie Cellulose oder modifizierte natürliche Polymere wie Viskose, Polyurethane, Silikone, sowie Polyolefine und Polymere, die durch chemische oder physikalische Verfahren hydrophilisiert sind, insbesondere mit Ladungen an der Oberfläche versehen wurden. In einer besonderen Ausführungsform werden ionische Polymere eingesetzt.

Bevorzugt sind Polymere und/oder Vliesstoffe, die bei Kontakt mit Flüssigkeit nur eine geringe Quellung aufweisen.

Ein Vorteil der Verwendung von Vliesstoffen als Aufnahmeschicht ist deren Filterwirkung gegenüber partikulärer Kontamination. Im konkreten Fall könnten in der Batterie vorhandene Schmutzpartikel den Sensor verschmutzen. Bei Verwendung von Vliesstoffen als Aufnahmeschicht werden diese Partikel allerdings schon in den Randbereichen zurückgehalten (gefiltert), so dass der überwiegende Anteil des Sensors nur mit der Flüssigkeit in Kontakt kommen kann. Dabei ist es denkbar, die poröse Aufnahmeschicht flächenmäßig größer zu gestalten als die darüber bzw. darunter liegenden elektrisch leitenden Schichten, so dass die überlappenden Bereiche der Aufnahmeschicht als Filterelement wirken können und so den Sensor vor Schmutz schützen können.

Geeignet sind insbesondere Vlieses aus polaren Faserpolymeren und hydrophil ausgestattete Vliese. Der Vorteil eines Vlieses ist, dass Flüssigkeiten zum einen sehr schnell aufgenommen werden können und zum anderen in der Aufnahmeschicht gleichmäßig verteilt werden. Sie besitzen aufgrund ihrer labyrinthartigen Faserstruktur ein hohes Aufnahmevermögen gegenüber Flüssigkeiten. Durch entsprechende Variation der Vliese lässt sich der Sensor sehr gut an die jeweilige Anwendung anpassen. Vliesstoffe beispielsweise aus Polyolefinen weisen ein sehr gutes Benetzungsverhalten gegenüber Ölen und dergleichen auf, nehmen aufgrund ihrer polaren Oberfläche Wasser allerdings nicht auf. Vliese aus polaren Faserpolymeren, wie Polyester oder Polyamid, können Wasser oder andere polare Flüssigkeiten oft teilweise im Polymer selbst aufnehmen und zudem in großen Mengen in ihre Faserzwischenräume einlagern. Polare Vliesstoffe eignen sich daher besonders für die Aufnahme und Erkennung von polaren Flüssigkeiten, wie Wasser und wässrigen Elektrolyten oder organischen polaren Elektrolyte mit polaren Leitsalz-Zusätzen. Darüber hinaus ermöglichen insbesondere nachträglich hydrophil ausgerüstete Vliese eine deutliche Erhöhung der Benetzbarkeit der Aufnahmeschicht und damit eine noch schnellere selektive Erkennung von Flüssigkeit durch den Sensor.

In bevorzugten Ausführungsformen ist das Vlies ein Spinnvlies, ein Nassvlies, Trockenvlies, schmelzgeblasenes Vlies (Meltblown-Vlies) oder elektrostatisch gesponnenes Vlies. Der Vorteil von Spinnvliesstoffen ist, dass die Konzentration von möglichen, eine selektive Erkennung der Flüssigkeit störenden Substanzen gering gehalten werden kann. Sofern das Vlies noch Reste von Netzmitteln oder sonstigen Rückständen von der Herstellung oder Nachbearbeitung aufweist, sollten diese vorher entfernt werden. Besonders vorteilhaft ist der Einsatz von homogenen Spinnvliesen, die durch Schmelzblasen hergestellt wurden.

Auch Nassvliesstoffe weisen eine sehr gute Homogenität auf, was z.B. durch die Möglichkeit der Verwendung von sehr feinen Fasern im Produktionsprozess bedingt ist. In diesem Falle sollten die Vliesstoffe, wie oben erwähnt, nach der Produktion gereinigt werden.

Es ist denkbar, die Vliesstoffe in einem weiteren Schritt mit einem Medium zu beaufschlagen, welches mit den wässrigen Medien bzw. dem Elektrolyten eine Wechselwirkung eingeht und so das jeweilige Signal verstärkt bzw. verbessert.

Die Vliesstoffe weisen bevorzugt feine Fasern auf, beispielsweise mit mittleren Durchmessern von weniger als 10 µm oder weniger als 5 µm. Bei solchen Vliesen ist der Kapillareffekt hoch, der eine schnelle Absorption von Flüssigkeiten bewirkt. Dabei können Vliesstoffe eingesetzt werden, deren Fasern durch nachträgliche mechanische Behandlung gesplittet werden, d.h. in Faser-Fibrillen aufgetrennt werden.

Es sind auch Vliesstoffe einsetzbar, die feinst fibrillierte, sog. "Pulp-Materialen" enthalten. Hierbei können sowohl natürliche Pulpe (z.B. Cellulose) aber auch synthetische Pulpe (z.B. Polyolefine; Polyamide) eingesetzt werden.

In einer besonderen Ausführungsform ist das Vlies gepfropft, insbesondere durch chemische Nachbehandlung mit hydrophilen Gruppen ausgestattet. Diese Behandlung erlaubt auch den Einsatz Vliesstoffe aus einem unpolaren Grundmaterial, beispielsweise aus Polyolefinen, für die Aufnahme von polaren Substanzen. Dadurch kann eine besonders hohe Absorptionsgeschwindigkeit für polare Flüssigkeiten erzielt werden. Diese hohe Absorptionsgeschwindigkeit führt weiter zu einer vollständigen Beaufschlagung der Aufnahmeschicht des Sensors mit der Flüssigkeit und schließlich zu einem äußerst schnellen und zuverlässigen selektiven Erkennen der in der Aufnahmeschicht befindlichen Flüssigkeit durch den Sensor. Beispielsweise können Polyolefine mit ionischen Gruppen durch Pfropfen ausgestattet werden, bevorzugt mit Acrylsäure oder Maleinsäureanhydrid.

Bevorzugt ist der Einsatz von Materialien, die mehr als 100 % ihres eigenen Gewichts an Flüssigkeit absorbieren können. Es könnten auch Superabsorber eingesetzt werden. Bevorzugt weist das Vlies eine Wassersteighöhe von mindestens 3, bevorzugt mindestens 10 mm/10 min oder mindestens 50 mm/10 min auf (5 mm Vliesstreifen nach 20 min, gemessen gemäß Ausführungsbeispiel).

Vorteilhafterweise umfasst der Sensor Mittel zum Anschluss an eine Signalauswertungseinheit. Der Vorteil hierbei ist, dass der Sensor auf einfache und kostengünstige Weise an eine Signalauswertungseinheit angeschlossen werden kann und so dessen Signale für eine Weiterverarbeitung aufbereitet werden können.

Zweckmäßigerweise umfassen die Mittel zum Anschluss an eine Signalauswertungseinheit drahtgebundene, drahtlose und/oder optische Mittel. Der Vorteil hierbei ist, dass bei drahtgebundenen Mitteln eine gängige und damit kostengünstige Kommunikation mit einer Signalauswertungseinheit ermöglicht wird. Sind die drahtgebundenen Mittel als Flachbandkabel ausgeführt, kann der Sensor auch in engen oder schwer zugänglichen Gehäusen angeordnet und mit der Signalauswertungseinrichtung verbunden werden. Bei der Verwendung von drahtlosen Mitteln ist kein Herausführen aus dem Gehäuse oder eine Öffnung notwendig, was den Aufwand für die Montage des Sensors erheblich reduziert. Werden optische Mittel, beispielsweise in Form von Glasfasern, verwendet, ist eine Übertragung der Signale ohne Verfälschung durch elektromagnetische Einflüsse möglich.

Die leitfähigen Schichten können metallische Folien oder Bleche sein. Diese können teilweise perforiert sein, was eine Aufnahme von Flüssigkeit in der Zwischenschicht erleichtert und beschleunigt. Diese Anordnung hat den Vorteil der einfachen Handhabung sowie der Möglichkeit, einfach die leitfähige Schicht austauschen zu können.

Zweckmäßigerweise ist der Sensor wiederverwendbar ausgebildet. Der Vorteil hierbei ist, dass der Sensor dann nicht nach jeder Erkennung von Flüssigkeit ausgetauscht werden muss. Dies senkt die Kosten insbesondere für eine Wartung des Sensors. Muss der Sensor trotzdem ausgetauscht werden, beispielsweise wegen einer mechanischen Beschädigung, ist es weiter vorteilhaft, den Sensor derart anzuordnen, so dass dieser möglichst einfach ausgetauscht werden kann.

Denkbar ist auch die Verwendung von mehreren Sensoren im Batterie-Gehäuse, die z.B. in unterschiedlicher Höhe angebracht sind. In diesem Fall könnte ein Leckage-Füllstand detektiert werden. Denkbar wäre in diesem Zusammenhang eine Vorrichtung in Form eines Ablass-Ventils oder einer Pumpe, die eine Leckage in Form von Kondens- oder Schmutzwasser sicher nach außen ableitet. Diese Vorrichtung könnte dann durch den Sensor gesteuert werden. Wird z.B. durch den Sensor Kondenswasser detektiert, könnte diese durch ein schaltbares Ventil aus dem Batterie-Gehäuse entfernt werden.

Gegenstand der Erfindung ist auch eine Vorrichtung (6) zum Speichern von Energie, umfassend zumindest einen Speicher für elektrische Energie, der im Inneren eines Gehäuses (7) angeordnet ist, sowie zumindest einen erfindungsgemäßen Sensor (1), der mit dem Inneren des Gehäuses (7) zur Erkennung von Flüssigkeiten im Gehäuse (7) zusammenwirkt.

Bei einer Vorrichtung ist es vorteilhaft, dass der Sensor im untersten Bereich des Gehäuses angeordnet ist. Dabei bezeichnet "unten" die unterste Position bei regulärem Betrieb der Vorrichtung. Die unterste Position ist somit diejenige, wohin die Flüssigkeiten bei Betrieb fließen und wo sie akkumulieren. Die unterste Position kann auch diejenige eines Teilbereichs des Gehäuses sein. Der Vorteil hierbei ist, dass eine Flüssigkeit, die der Sensor erkennen soll, selbständig nach unten in Richtung des Sensors fließt. Andernfalls wäre es ggf. über Pumpen oder dergleichen notwendig, entsprechend auftretende Flüssigkeiten im Gehäuse dem Sensor zur selektiven Erkennung der Flüssigkeiten zuzuführen. Durch den Wegfall einer derartigen Pumpe werden die Kosten für eine derartige Vorrichtung weiter reduziert. Die Wanderung der Flüssigkeit zu dem Sensor kann durch die Ausgestaltung des Gehäuses unterstützt werden, beispielsweise durch Rinnen und Schrägen.

In einer besonderen Ausführungsform ist der Sensor außerhalb des Gehäuses der Vorrichtung angeordnet. Er ist dann mit einer Verbindung zum Austausch von Flüssigkeiten mit dem Gehäuse verbunden. Auf diese Weise kann der Sensor vor aggressiven Flüssigkeiten oder erhöhter Temperatur im Inneren des Gehäuses geschützt werden. Zudem ist eine äußerst einfache und kostengünstige Montage des Sensors sowie wie dessen Austauschbarkeit gewährleistet. Schließlich stört auch kein abgeschirmtes Gehäuse eine mögliche drahtlose Übertragung von vom Sensor gemessenen Daten an eine Signalauswertungseinheit. Die Übermittlung der zu erkennenden Flüssigkeit an den Sensor kann dabei beispielsweise auf gravitative Weise oder über kapillaren erfolgen, so dass die Flüssigkeit selbsttätig zum Sensor fließt, oder mittels einer Pumpe, welche in regelmäßigen Intervallen und/oder bei Vorhandensein von zu erkennender Flüssigkeit die Flüssigkeit zum Sensor pumpt. Dies hat den Vorteil, dass der Sensor an beliebiger Position, beispielsweise auch oberhalb des Gehäuses der Vorrichtung angeordnet werden kann.

In einer besonderen Ausführungsform sind mehrere Sensoren an unterschiedlichen Positionen im Gehäuse angeordnet. Der Vorteil hierbei ist, dass durch die Anordnung mehrerer Sensoren eine redundante selektive Erkennung der zu untersuchenden Flüssigkeit auch bei einem Ausfall eines einzelnen Sensors möglich ist. Auch lässt sich der Ort einer Leckage besser eingrenzen, beispielsweise indem wenn verschiedene Sensoren unterschiedliche Signale übermitteln, die eine entsprechende Verteilung der Flüssigkeit im Gehäuse anzeigen: Werden mehrere Sensoren in vertikaler Richtung übereinander, das heißt in unterschiedlichen Höhen im Gehäuse angeordnet, so lässt sich damit ein Ort bzw. eine Menge einer Leckage abschätzen
in einer weiteren besonderen Ausführungsform ist zumindest ein Sensor in einer Aussparung angeordnet, die bevorzugt unten im Gehäuse positioniert ist. Der Vorteil bei der Anordnung zumindest eines Sensors in einer Aussparung besteht darin, dass zum einen die Aussparung genutzt werden kann, um eine zu erkennende Flüssigkeit zu sammeln. Zum anderen besteht damit der im Gehäuse übliche Platz für die Anordnung von Energiespeicherzellen zur Verfügung, so dass eine Anpassung der Zellen bezüglich ihres Platzbedarfs nicht notwendig ist.

In einer besonderen Ausführungsform der Erfindung umfasst ein Teil des Gehäuses, insbesondere der Boden, eine leitfähige Schicht, die eine leitfähige Schicht des Sensors bildet. Der Vorteil hierbei ist, dass auf diese Weise der Sensor komplett in das Gehäuse integriert werden kann und so ein Minimum an Platz benötigt.

Zweckmäßigerweise umfasst die Vorrichtung Mittel zur Regeneration des Sensors, insbesondere Mittel zum Erhitzen und/oder Abkühlen. Der Vorteil hierbei ist, dass durch Anbringung derartiger Mittel, beispielsweise einer Heizung, eines Gebläses oder dergleichen eine in der Aufnahmeschicht befindliche Flüssigkeit wieder verdampft werden kann und so der Sensor in seinen Ausgangszustand vor der Erkennung der Flüssigkeit zurückversetzt werden kann. Dadurch ist der Sensor wiederverwendbar. Ein weiterer Vorteil dabei ist, dass die Mittel zum Erhitzen und/oder Abkühlen eine Temperierung des Gehäuses, insbesondere der Flüssigkeit und des Sensors ermöglichen, so dass die selektive Erkennung der Flüssigkeit immer bei derselben Temperatur durchgeführt werden kann. Somit wird die Zuverlässigkeit der selektiven Erkennung der Flüssigkeit erhöht.

In einer bevorzugten Ausführungsform ist das System ausfallsicher ("fail-safe") ausgestaltet. Bei dieser Ausführungsform erkennt das System, wenn der Sensor in Kurzschluss betrieben wird bzw. von der Messeinheit getrennt wird. Beide Fälle werden von der Signalverarbeitungseinheit erkannt und ausgewertet. Auf diese Weise wird sichergestellt, dass ein ausgefallener Sensor ermittelt wird, so dass keine falschen Signale versendet werden und insbesondere eine Änderung in der Batterie nicht erkannt wird. Das Überwachungssystem kann auch so ausgestaltet sein, dass elektrische oder optische Eigenschaften innerhalb eines definierten Frequenzspektrums ausgewertet werden. Dadurch wird eine weitere Verbesserung der Selektivität erreicht.

In einer bevorzugten Ausführungsform ist der Sensor an eine Signalauswertungseinheit angeschlossen. Die Signalauswertungseinheit ist bevorzugt Teil des erfindungsgemäßen Überwachungssystems. In der Auswertungseinheit wird das Signal aus dem Sensor aufgenommen, bevorzugt digitalisiert, und anschließend verarbeitet und ausgegeben. Bevorzugt ist die Auswertungseinheit eine elektronische Auswertungseinheit, die zudem bevorzugt steuerbar ist. Sie kann die von dem Sensor übermittelten Daten mit gespeicherten Daten, beispielsweise Kennwerte, Signalverläufen, Signalhistorien, oder Signalgradienten vergleichen. Basierend auf den Vergleich entscheidet die Auswertungseinheit, welches Medium den Sensor kontaktiert, und gegebenenfalls wie dieses Medium beschaffen ist (lonenkonzentration, Art der lonen). In Abhängigkeit von einer übergeordneten Steuereinheit erzeugt die Auswertungseinheit beispielsweise adäquate, weiter verarbeitbare Signale, zum Beispiel 0 bis 10 V analog, 0/10 V digital, 4 bis 20 mA analog, serielle Signale oder USB.

In den bevorzugten Ausführungsformen überträgt die Signalauswertungseinheit die Informationen an ein Batterie-Management-System (BMS). Ein solches System ist bei üblichen Batteriesystemen häufig bereits vorhanden. Die Signalauswertungseinheit kann dabei direkt in das BMS integriert werden. Dies hat den Vorteil, dass alle sicherheitsrelevanten Daten in einer Einheit überwacht und verwaltet werden und gegebenenfalls gespeichert werden können. Die Einheit kann anhand der Summe der Informationen "Entscheidungen" treffen. Die Einheit kann autark ausgeschaltet sein und die Sicherheit der Batterie überwachen.

Gegenstand der Erfindung ist auch ein Überwachungssystem (1, 5, 6) zur Überwachung von Vorrichtungen zum Speichern von Energie, umfassend eine erfindungsgemäße Vorrichtung (6) zum Speichern von Energie und eine Signalauswertungs- und Steuerungseinrichtung (5), die derart zusammenwirken, dass,
wenn der Sensor (1) selektiv erkennt, ob er mit Wasser oder mit einem Elektrolyten und gegebenenfalls nicht mit einer Flüssigkeit in Kontakt steht, die Signalauswertungs- und Steuerungseinrichtung (5) die Vorrichtung (6) zur Vermeidung von Beschädigungen von einem Verbraucher der Vorrichtung (6) trennt und/oder ein Signal zum Wechseln der Vorrichtung (6) erzeugt.

Gegenstand der Erfindung ist auch ein Verfahren zur Überwachung von Vorrichtungen (6) zum Speichern von Energie, umfassend die Schritte zumindest zeitweises Überprüfen mittels des Sensors (1), ob in dem Gehäuse der Vorrichtung Wasser oder ein Elektrolyt oder gegebenenfalls keine Flüssigkeit vorliegt,
Erzeugen eines Detektionssignals durch den Sensor (1) in Abhängigkeit eines Ergebnisses des Überprüfens,
Empfangen und Auswertung des vom Sensor (1) erzeugten Detektionssignals mittels einer Signalauswertungs- und Steuerungseinrichtung (5), und
Steuern der Vorrichtung (6) zur Vermeidung von Beschädigungen der Vorrichtung (6) und/oder zum weiteren Betrieb der Vorrichtung (6) anhand des empfangenen und ausgewerteten Detektionssignals mittels der Signalauswertungs- und Steuerungseinrichtung (5).

Vorteilhafterweise umfasst das Verfahren den Schritt eines zumindest zeitweisen Überprüfens, ob der Sensor kurzgeschlossen und/oder von der Signalauswertungs- und Steuerungseinheit getrennt ist. Der Vorteil hierbei ist, dass damit sichergestellt wird, dass ein ausgefallener Sensor erkannt wird, und somit keine Leckagen auftreten, die aufgrund des ausgefallenen Sensors nicht erkannt werden können. Damit wird die Zuverlässigkeit für die Überwachung von Vorrichtungen zum Speichern von Energie wesentlich erhöht.

Das zumindest zeitweise Überprüfen umfasst Ausführungsformen, bei denen der Sensor in Intervallen, kontinuierlich oder bei besonderen Ereignissen misst. Der Vorteil bei dem kontinuierlichen Messen ist, dass ein defekter oder ausgefallener Sensor sofort erkannt wird. Wenn dagegen nur in Intervallen gemessen wird, so kann eine Energieeinsparung erzielt werden. Alternativ ist es möglich, dass der Sensor bei bestimmten Ereignissen automatisch oder auch manuell aktiviert wird. Eine mögliche Ausführungsform ist dabei, dass eine Signalauswertung und -messung erst ein Signal des Sensors auswertet, wenn am Sensor eine stark ansteigende Kapazität gemessen wird. Schließlich ist es möglich, dass nur bzw. zusätzlich mittels des Sensors gemessen wird, wenn ein an den Sensor bzw. an die Vorrichtung angeschlossenes Energiespeicher/- erzeuger-Managementsystem einen Fehler meldet. Stellt ein derartiges Management-System beispielsweise eine zu hohe Temperatur innerhalb des Gehäuses der Vorrichtung fest, so lässt dies auf eine Leckage bei der Kühlung schließen oder aber es wird ein hoher innerer Widerstand durch das Managementsystem gemessen, was als Ursache haben kann, dass eine Energiespeicher- oder -erzeugerzelle Elektrolyt verliert. Wird dann mittels des Sensors zusätzlich eine selektive Erkennung einer möglichen Flüssigkeit durchgeführt, so kann ein entsprechender Fehler schneller und genauer festgestellt werden.

Gegenstand der Erfindung ist auch die Verwendung eines erfindungsgemäßen Sensors (1) zur Überwachung von Vorrichtungen (6) zum Speichern von Energie.

Denkbar ist auch, dass der Sensor und/oder die Auswerteeinheit und/oder die signalübertragenden Leitungen elektrisch abgeschirmt sind, so dass eventuelle Störsignale aus der Leistungselektronik der Batterie das Messergebnis nicht negativ beeinflussen können. Dies ist zum Beispiel für Automobil- und sicherheits-relevante Applikationen vorteilhaft, da eine solche Abschirmung die Störanfälligkeit des Sensors reduziert.

### Kurzbeschreibung der Zeichnungen

Weitere Vorteile und Merkmale der Erfindung ergeben sich aus der nachfolgenden Beschreibung beispielhafter Ausgestaltungen anhand der Zeichnungen. Dabei zeigt:
- Figur 1: einen Sensor gemäß einer ersten Ausführungsform verbunden mit einer Signalauswertungseinheit;
- Figur 2a, b: eine Vorrichtung zur Energiespeicherung gemäß einer ersten Ausführungsform mit einem Sensor;
- Figur 3a, c: eine Vorrichtung gemäß einer dreizehnten Ausführungsform mit einem Sensor;
- Figur 3b: eine Vorrichtung gemäß einer zwölften Ausführungsform mit einem Sensor;
- Fig.4: den statistischen Kapazitätsverlauf eines erfindungsgemäßen Sensors in Abhängigkeit von der Zeit für verschiedene Flüssigkeiten; und
- Fig.5: den Kapazitätsverlauf eines erfindungsgemäßen Sensors in Abhängigkeit von der Zeit bei Zugabe von Wasser und Zugabe von Elektrolyt.

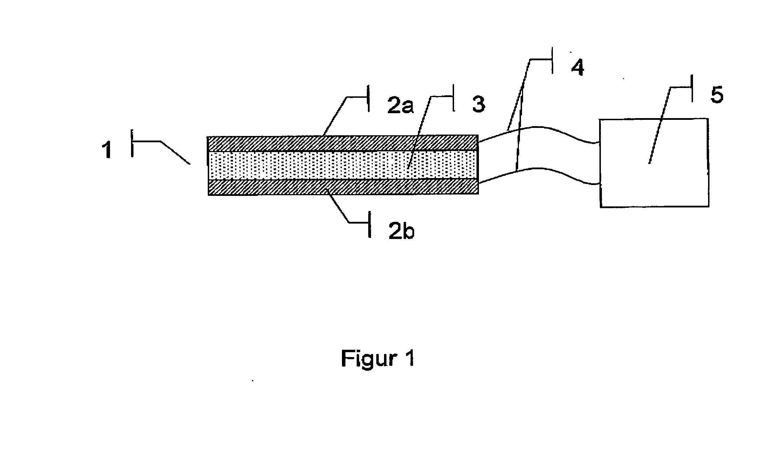

Besondere beispielhafte Ausgestaltungen erfindungsgemäßer Sensoren und Vorrichtungen sind in den Figuren 1 bis 3 gezeigt. In Figur 1 bezeichnet Bezugszeichen 1 einen Sensor zur selektiven Erkennung von Flüssigkeiten in Vorrichtungen zum Speichern von Energie, welcher zur selektiven Erkennung von zumindest zwei der Flüssigkeiten Wasser, demineralisiertes Wasser, Kühlmedium und Elektrolyt ausgebildet ist. Der Sensor 1 umfasst weiter zwei elektrisch leitende Schichten 2a, 2b zwischen denen eine Aufnahmeschicht 3 in Form eines Dielektrikums angeordnet ist. Die elektrisch leitenden Schichten 2a, 2b sind über Kabel 4 mit einer Signalauswertungseinheit 5 verbunden. Die elektrisch leitenden Schichten 2a, 2b sind zueinander parallel angeordnet. Die Aufnahmeschicht 3 in Form des Dielektrikums ist elektrisch nicht leitend und porös ausgebildet. Nimmt die Aufnahmeschicht 3 Flüssigkeiten auf, ändert sich eine Kapazität des aus den elektrisch leitenden Schichten 2a, 2b und der Aufnahmeschicht 3 gebildeten Kondensators. Die Kapazitätsänderung ist dabei abhängig von der Art der Flüssigkeit bzw. deren Dielektrizitätskonstante. Die in Fig. 1 gezeigte waagerechte Anordnung des Sensors 1 bzw. des Kondensators ist dabei nicht einschränkend, das heißt der Sensor 1 kann auch waagerecht, oder auch in jeder beliebigen Lage angeordnet werden.

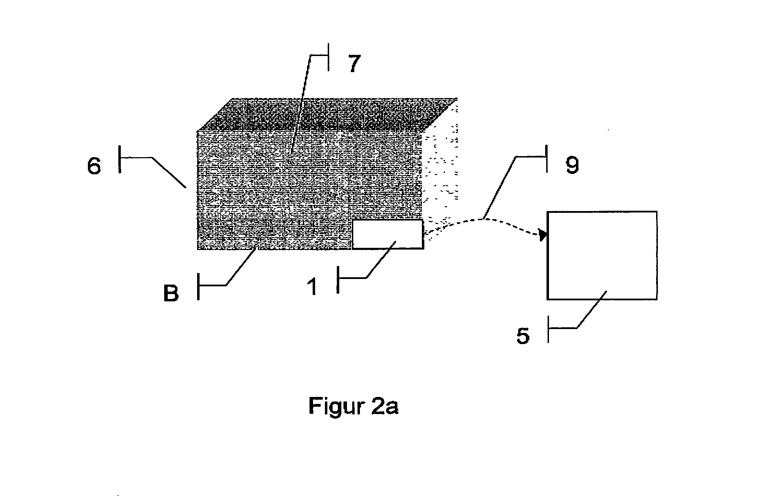

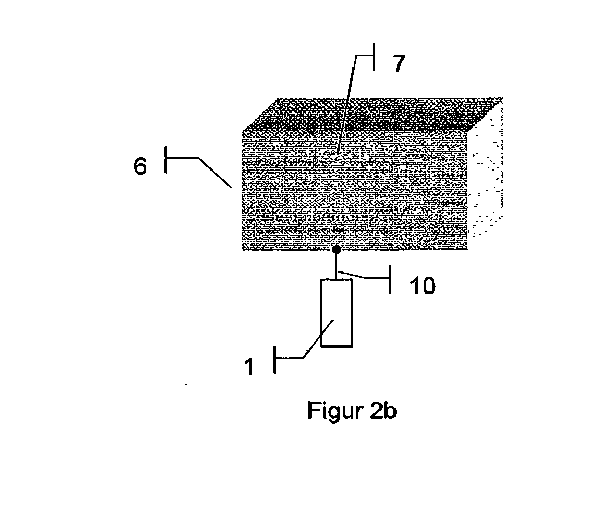

Figur 2 zeigt Vorrichtungen zum Speichern von Energie mit einem Sensor 1. In Figur 2a ist ein Gehäuse 7 einer Batterie 6 in perspektivischer Darstellung gezeigt. Im unteren Bereich B des Gehäuses 7 ist ein Sensor 1 waagerecht angeordnet und mit einer Signalauswertungseinheit 5 mittels drahtloser Mittel 9 verbunden.

In Figur 2b ist im Gegensatz zu der Figur 2a der Sensor 1 nicht im Gehäuse 7 der Batterie 6 angeordnet, sondern außerhalb des Gehäuses 7. Dabei ist der Sensor 1 über eine Leitung 10 mit dem Gehäuse 7 verbunden, so dass eine Flüssigkeit dann mittels der Verbindung 10 zum Sensor zu deren selektiver Erkennung geleitet werden kann. Dies kann gravitativ erfolgen, indem der Sensor 1 unterhalb des Gehäuses 7 angeordnet wird, so dass die Flüssigkeit mittels Schwerkraft zum Sensor 1 fließt, oder aber auch auf aktive Weise, beispielsweise mittels einer Pumpe, die die zu erkennende Flüssigkeit zum Sensor 1 fördert.

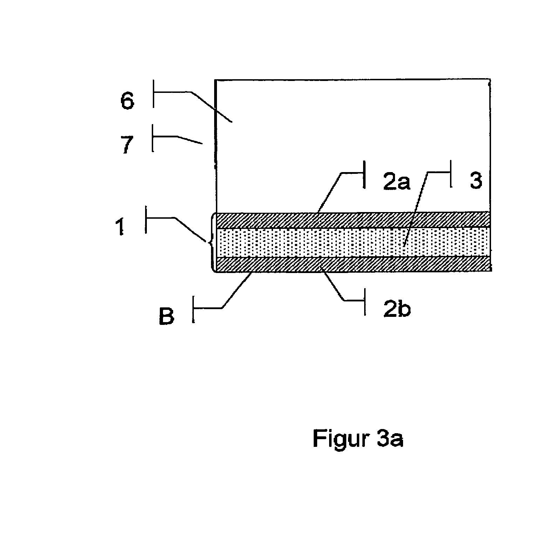

Figur 3a zeigt einen Sensor 1, der in einem Gehäuse 7 einer Batterie 6 angeordnet ist. Der Sensor 1 umfasst dabei zwei elektrisch leitende Schichten 2a, 2b, zwischen denen eine Aufnahmeschicht 3 angeordnet ist. Der Sensor 1 bzw. das Gehäuse 7 sind dabei so ausgebildet, dass die untere leitfähige Schicht 2b des Sensors 1 durch das Gehäuse 7 gebildet wird, das heißt die untere leitfähige Schicht 2b des Sensors 1 bildet einen Boden B des Gehäuses 7. Die obere leitfähige Schicht 2a ist dabei getrennt vom Gehäuse 7 angeordnet.

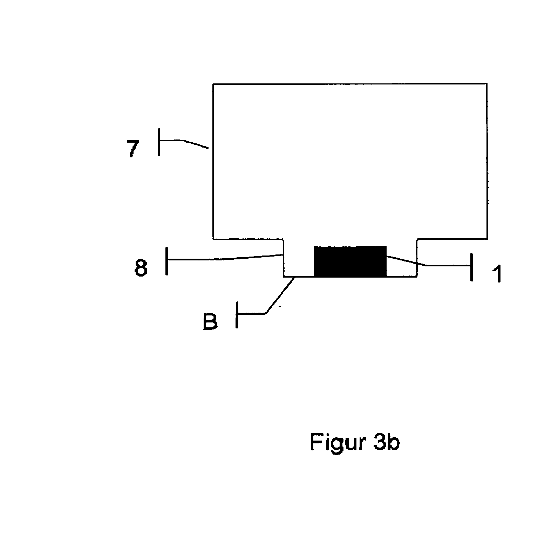

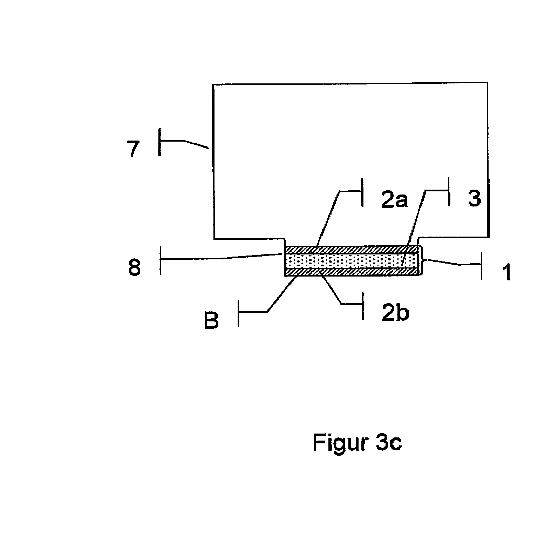

In Fig. 3b ist eine weitere mögliche Ausführungsform einer Vorrichtung zum Speichern von Energie in Form einer Batterie 6 mit einem Sensor 1 gezeigt. Im unteren Bereich, das heißt im Bereich des Bodens B des Gehäuses 7, ist eine Aussparung 8 angeordnet. Die Aussparung 8 dient dabei sowohl zur Anordnung des Sensors 1 in der Aussparung 8 als auch als Wanne zum Sammeln der im Gehäuse 7 auftretenden Flüssigkeiten. Figur 3c zeigt schließlich im Wesentlichen eine Kombination von Ausführungen der Vorrichtungen gemäß der Figuren 3a und 3b. Ein Boden B der Aussparung 8 ist dabei gemäß Figur 3a ausgebildet, das heißt die untere leitfähige Schicht 2b des Sensors 1 ist durch den Boden B der Aussparung bzw. des Gehäuses 7 gebildet. Die obere leitfähige Schicht 2a ist dabei getrennt von der Aussparung 8 bzw. dem Gehäuse 7 angeordnet.

Zusammenfassend weist die Erfindung den Vorteil auf, dass auf einfache und zuverlässige Weise Flüssigkeiten in Vorrichtungen zum Speichern von Energie erkannt und unterschieden werden können und damit Beschädigungen des Energiespeichers durch Flüssigkeiten vermieden werden können.

### Ausführungsbeispiele:

### Prüfung verschiedener Sensormaterialien

Es wurden Sensoren mit unterschiedlichen Aufnahmeschichten hergestellt und geprüft. Als elektrisch leitfähige Schichten wurden folgende Materialien eingesetzt, wobei die verwendeten Flächen zwischen 0,5 und 4 cm² lagen:
- Kupfer-Folien verschiedener Dicken,
- Aluminium-Folie,
- Perforierte Kupfer-Folie (ca. 10 Löcher/cm²; Lochdurchmesser ca. 0.2 mm),
- Kupfer-Folie und Edelstahl-Folie (Stahl 316/V4A) (die Edelstahl-Folie soll dabei das Gehäuse nachstellen),
- Nickel-Gold-Folie

Zwischen den elektrisch leitfähigen Schichten und der Aufnahmeschicht ist eine zusätzliche elektrisch-isolierende Schicht aufgebracht. Diese ist idealerweise fest mit den elektrisch-leitfähigen Schichten verbunden (Leckagefluid kann nicht durch Adhäsion zwischen elektrisch-leitfähige Schicht und elektrisch-isolierende Schicht gelangen) und kann durch Isolierlack, Deckfolie (PA, Pl, PEN) oder andere dünnschichtige isolierende Materialien ausgeprägt sein. Dabei kann ein elektrisch-isolierender Lack durch aufsprühen, -streichen o.ä. und Deckfolie durch Lamination aufgebracht werden.

In allen Experimenten zeigte sich, dass der Einfluss des Materials der leitfähigen Schicht gering war. Lediglich bei Verwendung der besputterten

Vliesstoffe zeigte sich eine etwas schlechtere Signalauflösung. Dies kann mit der inhomogenen Gesamt-Schichtdicke sowie den relativ geringen Schichtdicken an Metall um die Fasern herum erklärt werden. Trotzdem zeigte sich auch bei diesen Experimenten eine prinzipielle Tauglichkeit.

Als Aufnahmeschichten wurden die folgenden Vliesstoffe eingesetzt:
Beispiel 1: Evolon 117, Spinnvlies bestehend aus Splittfasern, die aus PET und PA6 aufgebaut sind, und die nachträglich mechanisch gesplittet/fibrilliert wurden, erhältlich von der Firma Evolon.
Beispiel 2: PBT-Meltblown-Spinnvlies PLURATEXX 5021; Firma Freudenberg.
Beispiel 3: PP-Meltblown-Spinnvlies FS 2192-11SG; Firma Freudenberg; dieses ist nachträglich chemisch mit Acrylsäure gepfropft (UV-induzierte Pfropfungs-Reaktion). Vorteil dieses gepfropften Vliesstoffes ist seine extrem hohe Absorptionsgeschwindigkeit für polare Flüssigkeiten, Die hohe Absorptionsgeschwindigkeit führt zu einer raschen vollständigen Belegung der porösen Aufnahmeschicht und führt daher zu einem schnellen, verlässlichen "Anspringen" des Sensors.
Beispiel 4: PET-Nassvlies FFA 2033; Firma Freudenberg, gewaschen mit destilliertem Wasser.
Beispiel 5: PET-Trockenvlies H 1015; Firma Freudenberg, gewaschen mit destilliertem Wasser.
Beispiel 6: Polyolefin-Nassvlies FS 2200/055 Firma Freudenberg, bestehend aus PE- und PP-Fasem sowie fibrilliertem PE-Pulp, nachträglich mit Acrylsäure chemisch gepfropft.

Für die Vliesstoffe gemäß den Beispielen 1 bis 6 wurde die jeweilige Wassersteighöhe bestimmt. Dazu wird ein 5 mm breiter Vliesstreifen in Wasser getaucht und die Steighöhe des Wassers (gewichteter Mittelwert der Steighöhen-Front) nach 10 Minuten abgelesen. Die Wasser-Steighöhe ist ein Maß für die Benetzung des Vlieses, nämlich die Absorptions-Geschwindigkeit und damit für das "Anspringen" des Sensors. Die Ergebnisse sind in Tabelle 1 zusammengefasst.

**Tabelle 1: Eigenschaften verschiedener Vliesstoffe**

| Beisp. | Vlies | Herstellung | Polymer | Flächengew. | Dicke | Wasser |
|---|---|---|---|---|---|---|
| | | | | (g/m²) | (mm) | Steighöhe |
| | | | | | | (mm/10 min) |
| 1 | EVOLON | Spinnvlies & Splittung | PET&PA6 | 200 | 0,4 | 5-10 |
| 2 | PLURATEXX 5021 | Meltblown | PBT | 55 | 0,3 | 5 |
| 3 | FS 2192-11SG | Meltblown | PP+ Acrylsäure | 38 | 0,11 | > 80 |
| 4 | FFA 2037 | Nassvlies | PET | 155 | 0,5 | 5 |
| 5 | H 1015 | Trockenvlies | PET | 150 | 0,27 | 5 |
| 6 | FS 2200/055 | Nassvlies mit PE-Pulp | PE/PP+ Acrylsäure | 50 | 0,12 | > 50 |

### Verhalten des Sensors gegenüber Wasser und Elektrolyten

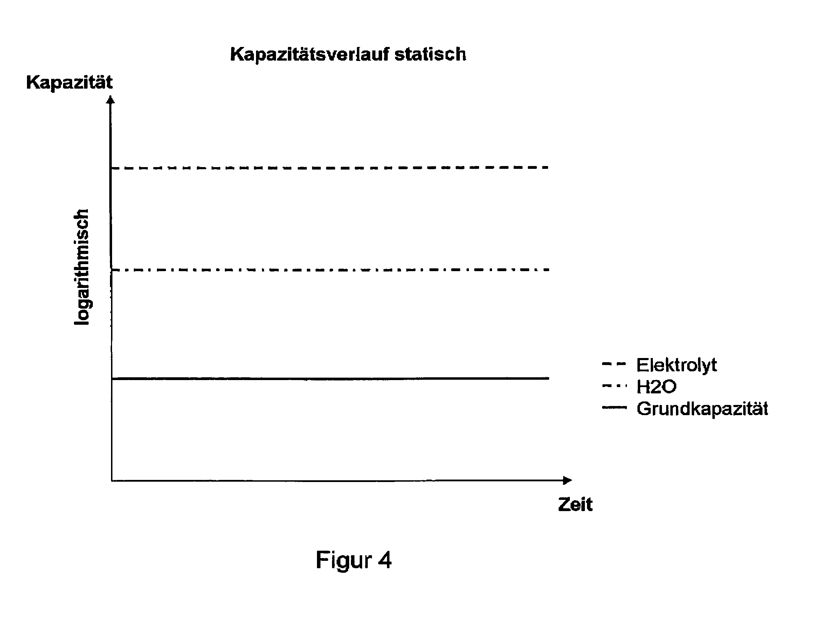

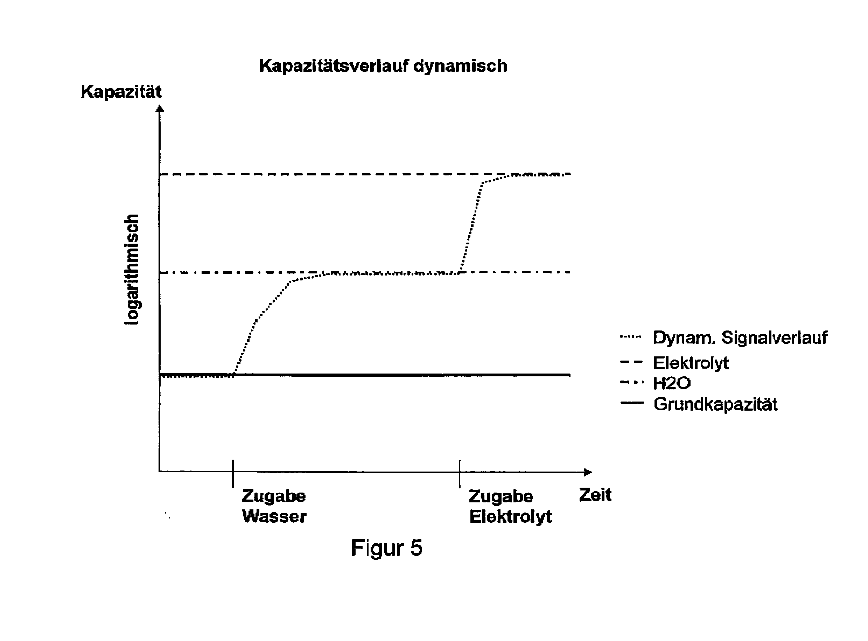

Die nachfolgenden Experimente wurden mit Cu-Folien als elektrisch leitfähige Schichten sowie EVOLON 117 als Aufnahmeschicht durchgeführt. Die Figuren 4 und 5 zeigen die Selektivität hinsichtlich der zu erwartenden Leckagemedien über die Zeit. Der hier auf der y-Achse dargestellte Kapazitätswert ist proportional zur Messkapazität des Sensors. Während die Grundkapazität des Sensorelementes im unbenetzten Fall auf niedrigem Niveau liegt (ca. 80 relative Einheiten), führt eine wässrige Lösung, nämlich von Leitungswasser, demineralisiertem Wasser oder einem Wasser-Glycol-Gemisch (BASF GL48) zu einem schlagartigen Anstieg der Kapazität um den Faktor 40 auf ca. 3250 relative Einheiten. Elektrolytische Lösungen wiederum haben eine noch höhere Dielektrizitätszahl und führen zu einer ca. 1000fach höheren relativen Kapazität im Vergleich zum Grundwert und einer 20fach höheren relativen Kapazität im Vergleich zu wässrigen Lösungen. Die Gegenwart von Elektrolyten lässt sich selbst dann nachweisen, wenn die poröse Aufnahmeschicht vor dem Kontakt mit dem Elektrolyten bereits vollständig mit Wasser getränkt war (siehe Figur 5). Bereits geringe Mengen (<1 Vol.%) an Elektrolyt führen dann zu einem erheblichen Kapazitätsanstieg.

Aus den Figuren 4 und 5 ist erkennbar, dass das Sensorsystem in der Lage ist, die auftretenden Leckagemedien sensitiv und selektiv voneinander zu unterscheiden. Darüber hinaus ist die Sensitivität insbesondere bei der Detektion von Elektrolyt, die praktisch besonders kritisch ist, und dessen Unterscheidung von den übrigen Medien besonders hoch. Zudem ist aus Abb. 5 erkennbar, dass ein bereits mit Wasser beladener Sensor, dessen Aufnahmeschicht bereits vollständig mit Wasser belegt ist, bei Zugabe von geringen Mengen Elektrolyt diesen schnell und deutlich nachweisen kann. Figur 4 ist zu entnehmen, dass auch die verschiedenen wässrigen Medien eine unterschiedliche Kapazität aufweisen und dadurch grundsätzlich unterscheidbar sind.

## Patentansprüche

1. Sensor (1) zur selektiven Erkennung von Flüssigkeiten in Vorrichtungen zum Speichern von Energie, wobei der Sensor (1) zumindest eine poröse Aufnahmeschicht (3) zur Absorption von Flüssigkeiten umfasst.

2. Sensor nach Anspruch 1, wobei der Sensor (1) selektiv erkennt, ob er mit Wasser, mit einem Elektrolyten oder nicht mit einer Flüssigkeit in Kontakt steht

3. Sensor (1) nach mindestens einem der vorhergehenden Ansprüche, wobei der Sensor (1) als kapazitiver und/oder optischer Sensor ausgebildet ist.

4. Sensor (1) nach mindestens einem der vorhergehenden Ansprüche, wobei die Aufnahmeschicht (3) als Dielektrikum ausgebildet und zwischen zwei elektrisch leitenden Schichten (2a, 2b) angeordnet ist.

5. Sensor (1) nach Anspruch 4, wobei zumindest eine elektrisch leitende Schicht (2a, 2b) Poren aufweist.

6. Sensor (1) nach mindestens einem der vorhergehenden Ansprüche, wobei die Aufnahmeschicht (3) ein Vlies umfasst.

7. Sensor (1) nach Anspruch 6, wobei das Vlies Fasern aufweist, die ein Polymer enthalten, das ausgewählt ist aus der Gruppe der Polyester, Polyamide, ,Polyacrylate, Polymethacrylate, Polyoxyalkylene, Polysäuren sowie Copolymere davon, natürliche Polymere wie Cellulose oder modifizierte natürliche Polymere wie Viskose, Polyurethane, Polysillkone, sowie Polyolefine und Polymere, die durch chemische oder physikalische Verfahren hydrophilisiert sind.

8. Sensor (1) nach mindestens einem der Ansprüche 6 oder 7, wobei das Vlies ein Spinnvlies ist, insbesondere ein Nassvlies, Trockenvlies, Meltblown-Vlies oder elektrostatisch gesponnenen Vlies.

9. Vorrichtung (6) zum Speichern von Energie, umfassend zumindest einen Speicher für elektrische Energie, der im Inneren eines Gehäuses (7) angeordnet ist, sowie zumindest einen Sensor (1) gemäß zumindest einem der vorhergehenden Ansprüche, wobei der Sensor (1) mit dem Inneren des Gehäuses (7) zur Erkennung von Flüssigkeiten im Gehäuse (7) zusammenwirkt.

10. Vorrichtung (6) nach Anspruch 9, wobei der Sensor (1) im untersten Bereich (B) des Gehäuses (7) angeordnet ist.

11. Vorrichtung (6) nach zumindest einem der Ansprüche 9 bis 10, wobei mehrere Sensoren (1) an unterschiedlichen Positionen im Gehäuse (7) angeordnet sind und/oder zumindest ein Sensor (1) in zumindest einer Aussparung (8) angeordnet ist.

12. Vorrichtung (6) nach zumindest einem der Ansprüche 9 bis 11, wobei ein Teil (B) des Gehäuses, insbesondere der Boden, eine leitfähige Schicht (2a, 2b) umfasst, die eine leitfähige Schicht (2a, 2b) des Sensors (1) bildet.

13. Vorrichtung (6) nach zumindest einem der Ansprüche 9 bis 12, wobei die Vorrichtung (6) Mittel zur Regeneration des Sensors, insbesondere Mittel zum Erhitzen und/oder Abkühlen, umfasst.

14. Vorrichtung (6) nach zumindest einem der Ansprüche 9 bis 13 in Form einer Batterie, Brennstoffzelle, eines Akkumulators oder Kondensators.

15. Überwachungssystem (1, 5, 6) zur Überwachung von Vorrichtungen zum Speichern von Energie, umfassend
eine Vorrichtung (6) zum Speichern von Energie gemäß einem der vorhergehenden Ansprüche und
eine Signalauswertungs- und Steuerungseinrichtung (5),
die derart zusammenwirken, dass,
wenn der Sensor (1) selektiv erkennt, ob er mit Wasser oder mit einem Elektrolyten in Kontakt steht,
die Signalauswertungs- und Steuerungseinrichtung (5) die Vorrichtung (6) zur Vermeidung von Beschädigungen von einem Verbraucher der Vorrichtung (6) trennt und/oder ein Signal zum Wechseln der Vorrichtung (6) erzeugt.

16. Verfahren zur Überwachung von Vorrichtungen (6) zum Speichern von Energie, umfassend die Schritte
zumindest zeitweises Überprüfen mittels eines Sensors (1) gemäß mindestens einem der vorhergehenden Ansprüche, ob in dem Gehäuse der Vorrichtung Wasser oder ein Elektrolyt vorliegt,
Erzeugen eines Detektionssignals durch den Sensor (1) in Abhängigkeit eines Ergebnisses des Überprüfens,
Empfangen und Auswertung des vom Sensor (1) erzeugten Detektionssignals mittels einer Signalauswertungs- und Steuerungseinrichtung (5), und
Steuern der Vorrichtung (6) zur Vermeidung von Beschädigungen der Vorrichtung (6) und/oder zum weiteren Betrieb der Vorrichtung (6) anhand des empfangenen und ausgewerteten Detektionssignals mittels der Signalauswertungs- und Steuerungseinrichtung (5).

17. Verfahren nach Anspruch 16, umfassend den Schritt des zumindest zeitweisen Überprüfens, ob der Sensor (1) kurzgeschlossen und/oder von der Signalauswertungs- und Steuerungseinrichtung (5) getrennt ist.

18. Verwendung eines Sensors (1) gemäß zumindest einem der vorhergehenden Ansprüche zur Überwachung von Vorrichtungen (6) zum Speichern von Energie.
